# EUROPEAN PATENT SPECIFICATION

(11) **EP 1 619 923 B1**
(45) Date of publication and mention of the grant of the patent: **26.03.2014**
(21) Application number: 05253557.2
(22) Date of filing: 09.06.2005
(51) Int. Cl.: H04L 1/20, H04L 1/00

(54) **Communications device and mobile terminal**
Kommunikationsgerät und mobiles Endgerät
Dispositif de communication et terminal mobile

(30) Priority: 22.07.2004 JP 2004214349
(43) Date of publication of application: 25.01.2006
(73) Proprietor: FUJITSU LIMITED, Kawasaki-shi, Kanagawa 211-8588 (JP)
(72) Inventor: Furuumi, Yusuke, c/o Fujitsu Limited, Kawasaki-shi, Kanagawa 211-8588 (JP); Suzuki, Masaaki, c/o Fujitsu Limited, Kawasaki-shi, Kanagawa 211-8588 (JP); Nishikawa, Takurou, c/o Fujitsu Limited, Kawasaki-shi, Kanagawa 211-8588 (JP)
(74) Representative: Wilding, Frances Ward

(56) References cited:
- EP-A- 1 343 339
- WO-A-03/055099
- WO-A-2004/112288
- US-A1- 2004 022 213

## Description

The present invention relates to communications devices and in particular but not exclusively to mobile terminals that are used in mobile wireless communications systems that employ, for example, the W-CDMA (UMTS) communications method.

At present, in the 3rd Generation Partnership Project (3GPP), efforts are underway to standardize the W-CDMA (UMTS) method as one method for third-generation mobile communications systems. Furthermore, one of the standardization themes is the standardization of an High-speed Downlink Packet Access (HSDPA) that provides a maximum downlink transfer speed of approximately 14 Mbps.

HSDPA uses an adaptive modulation and coding method (AMC) to adaptively switch between, for example, a QPSK modulation scheme and a 16 QAM scheme, depending on the wireless environment between the base station and the mobile terminal.

Furthermore, HSDPA employs the Hybrid Automatic Repeat reQuest (H-ARQ) scheme. In H-ARQ, a repeat request to the applicable base station is made when the mobile terminal detects an error in the data received from the base station. The base station, after it has received the repeat request, resends the data, so the mobile terminal performs error correction decoding using both the data that has been received already and the data received after the resend. In this way, in H-ARQ, the data that has already been received can be used effectively, even when there is an error, increasing the gain of the error correction decoding, and reducing the number of resend repetitions.

The primary wireless channels used in HSDPA are the High Speed-Shared Control Channel (HS-SCCH), the High Speed-Physical Downlink Shared Channel (HS-PDSCH), and the High Speed-Dedicated Physical Control Channel (HS-DPCCH).

In HS-SCCH and HS-PDSCH, both use the shared channel approach in the downlink direction (or in other words, in downlinks from the base station to the mobile terminal), where HS-SCCH is a control channel that sends a variety of parameters relating to the data being sent in HS-PDSCH. These various parameters include, for example, modulation-type data that indicates the type of modulation method that will be used when sending data using the HS-PDSCH, the number of spreading codes that have been allocated (the number of codes), and the rate matching pattern performed for the transmission data.

On the other hand, HS-DPCCH is a dedicated control channel for uplinks (or in other words, uplinks from the mobile terminal to the base station), used when the mobile terminal sends to the base station the ACK signal or the NACK signal, depending on whether the data received through the HS-PDSCH is received or refused. Note that when the mobile terminal fails to receive the data (such as when there is a CRC error in the received data), the NACK signal is sent from the mobile terminal, and the base station performs resend control.

Otherwise, HS-DPCCH is used for a mobile terminal that has measured the reception quality (for example, SIR) of signals received from the base station in order to send the results of the measurements to the base station as Channel Quality Indicator (CQI) information. The base station determines whether or not the wireless environment in the downlink direction is acceptable, and if acceptable, switches to a modulation method that can support faster data transmissions, but, conversely, if unacceptable, switches to a modulation method that sends data more slowly. (In other words, adaptive modulation is performed.)

### Channel Structure

The channel structure in HSDPA will be explained next.

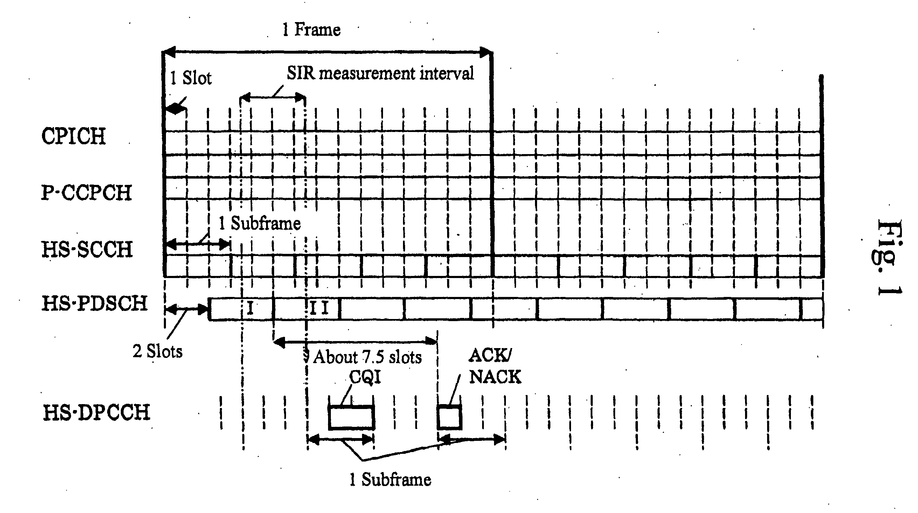

Figure 1 shows the channel structure in HSDPA. Note that W-CDMA employs a code-division multiplexing method, so each channel is separated by its code.

First, a simple explanation will be made of the channels that have not been explained.

Common Pilot Channel (CPICH) and Primary Common Control Physical Channel (P-CCPCH) are each shared channels in the downlink direction.

CPICH is a channel for sending a so-called pilot signal, where a channel is inferred at the mobile terminal, and that channel is used as a timing reference for another downlink physical channel within the cell, and used for performing a cell search. Each cell has a P-CCPCH, which channel is used for sending notification information.

Next, Figure 1 will be used to explain the channel timing relationships.

As in the figure, each channel comprises one frame (10 ms), comprising 15 slots, where each slot is the equivalent of 2560 chips. As described above, because CPICH is used as the reference for other channels, the beginning of the P-CCPCH and the HS-SCCH frames match the beginning of the CPICH frame. Here the beginning of the HS-PDSCH frame extends 2 slots relative to HS-SCCH, or the like, but because the modulation-type information is received by the mobile terminal through HS-SCCH, it is possible to demodulate the HS-PDSCH using the demodulation method that corresponds to the modulation type received. Furthermore, the HS-SCCH and HS-PDSCH are comprised of a single subframe of 3 slots.

HS-DPCCH is an uplink channel, where the first slot is used for sending from the mobile station to the base station the ACK/NACK signals that are response signals for confirming reception, after approximately 7.5 slots from the reception of the HS-PDSCH. Furthermore, the second and third slots are used for sending feedback to the base station on a regular schedule regarding the CQI information for adaptive modulation control. Here the CQI information that is sent is calculated based on the reception environment (for example, based on the CPICH SIR measurement results) in the interval from 4 slots prior to the sending of the CQI information to 1 slot prior to the sending of the CQI information.

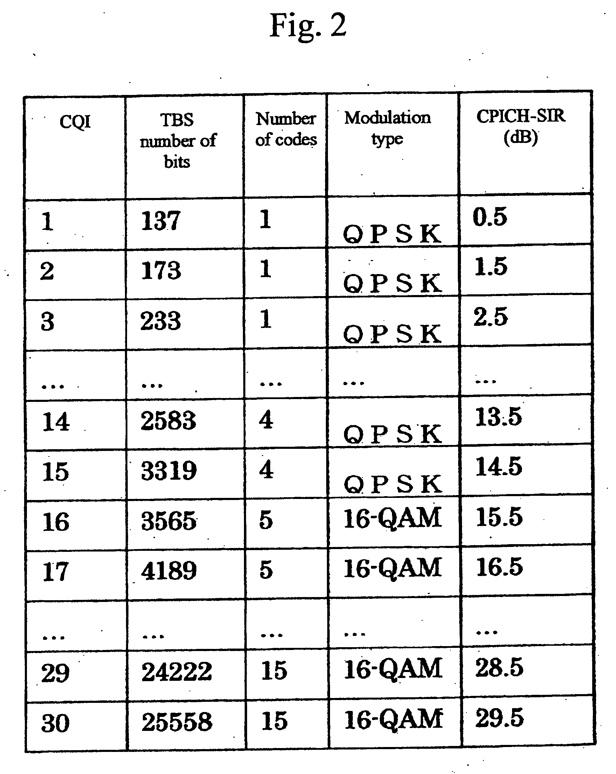

Figure 2 shows the CQI table when the CPICH Signal-to-Interference Ratio (SIR) is used.

As shown in the figure, the table defines the correspondence of the CPICH-SIR with the modulation type, the number of codes, and the number of bits for the Transport Block Size (TBS) for each of the CQI data 1 through 30.

Here the TBS number of bits is the number of bits that are transmitted in a single subframe, the number of codes is the number of spreading codes used in HS-PDSCH sending, and the modulation type indicates the use of either QPSK or QAM.

As is clear from the figure, the better the SIR (i.e., the higher the SIR) in CPICH, the bigger the value for the CQI. The bigger the CQI, the larger the corresponding TBS number of bits and the number of spreading codes, and the modulation method also switches to the QAM a modulation method, and so, of course, the better the SIR, the faster the transmission speed.

The table in the figure is stored, for example, in a memory possessed by the mobile terminal. Note that this table can be created through calculations on the received SIRs of the CPICH based on actual measurements to produce a specific error rate under a variety of transmission conditions.

As already explained, the mobile terminal measures the SIR of the CPICH in a reception environment measurement interval, references a table in memory, defines the CQI corresponding to the measured SIR, and transmits to the base station.

The base station performs the adaptive modulation control according to the received CQI information described above, and is able to achieve transmission control taking into consideration the reception environment of the CPICH at the mobile terminal.

The above was a simple explanation of the HSDPA channel structure.

The items pertaining to the HSDPA, described above, are disclosed in, for example, the 3rd Generation Partnership Project: Technical Specification Group Radio Access Networks; Multiplexing and Channel Coding (FDD), 3G TS 25. 212.

A previously-considered mobile terminal, which acts as the communications device, measures the reception environment, and the results are reported to the base station, which acts as the transmission device, and adaptive modulation control is performed in the communications device according to the reception environment.

However, the measurement of the mobile terminal is on a channel different from the channel on which the transmission occurs using adaptive modulation.

In a previously-considered system, ideally the CQI information is specified according to the reception quality of the channel on which the adaptive modulation control is performed itself (HS-PDSCH), but the HS-PDSCH cannot be used easily.

That is to say, the signals transmitted on the HS-PDSCH are not known in advance; when, for example, the QPSK method is selected, the received signal does not necessarily make it possible to evaluate correctly which of the 4 signal points to use, and, ultimately, it is not possible to accurately measure the reception SIR. In particular, when the 16 QAM method is selected, there are 16 signal points - four times as many - making the measurement of the reception SIR difficult.

Given this, in a previously-considered system, the reception SIR of the CPICH, a known channel that is different from the channel on which the adaptive modulation control is to be performed, is accurately measured and used to calculate the CQI.

However, as already explained, the SIR of the CPICH is a different channel from the HS-PDSCH, which is a channel on which the adaptive modulation control is to be performed (a channel wherein the spreading and transmission use a different spreading code), and thus it cannot be said that the reception environment is accurately reflected in the HS-PDSCH, so the adaptive modulation control does not operate ideally, and there is a loss of efficiency.

Consequently, it is desirable to track the reception environment on the channel on which the adaptive modulation control is to be performed, allowing ideal operation.

Document W02004/112288, which is only citable with regard to novelty, discloses a channel quality indicator value that is determined on a per transport block basis. A signal-to-interference ratio estimate of a control channel and a channel quality estimate of user-data channel are employed in the determination of the channel quality indicator. The channel quality estimate of the user-data channel can include information about Automatic Retransmission Request (ARQ) processing, and the number of iterations of a Turbo decoder. Additionally, information about the Cyclic Redundancy Check (CRC), which is determined on a per transport block basis, can be employed in the channel quality indicator determination. The determined channel quality indicator is reported to the radio communication system.

It is also desirable to produce other effects that cannot be obtained through conventional technologies.

According to an embodiment of an aspect of the present invention there is provided a communications device that not only receives pilot signals, but also receives signals that have been sent via a High Speed-Physical Downlink Shared Channel (HS-PDSCH), comprising a first measurement unit that measures the reception quality of said pilot signals, a second measurement unit that measures the reception quality of said signal that has been sent via a High Speed-Physical Downlink Shared Channel (HS-PDSCH), a control unit that controls, upon producing parameter information that is used in the adaptive modulation control, to use, primarily, the measurement results in said first measurement unit when the reception environment is not favorable, or to use, primarily, the measurement results in said second measurement unit, when the reception environment is favorable, and a transmitter unit that transmits said parameter information to a base station, wherein the reception environment is favorable when a Channel Quality Indicator (CQI) value is greater than a reference value and the reception environment is not favorable when the CQI value is below the reference value.

A communications device embodying the present invention can make it possible to perform adaptive modulation control ideally.

Reference will now be made, by way of example, to the accompanying drawings, in which:
Fig. 1 shows the channel structure in HSDPA.
Fig. 2 shows an example of a CQI table.
Fig. 3 shows a communications device (mobile terminal) according to one embodiment of the present invention.
Fig. 4 shows an SIR measurement in the HS-PDSCH reception processor according to one embodiment of the present invention.

Embodiments of the present invention will be explained, referencing the figures below.

Explanation of a First Embodiment

In the first embodiment, a known signal (CPICH) is received, and a signal subject to adaptive modulation control (HS-PDSCH) is received, so the adaptive modulation control can be optimized by switching between either controlling focusing on the reception quality of the known signal, or controlling focusing on the reception quality of the signal that is subject to adaptive modulation control.

Communications Device

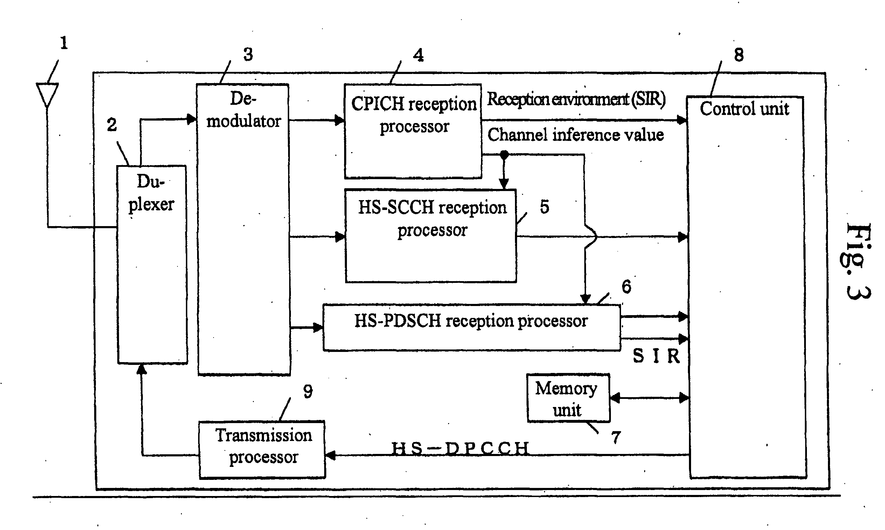

A communications device embodying the present invention will be explained next, using Figure 3.

Figure 3 shows a communications device embodying the present invention. As an example of a communications device, a mobile terminal that is used in a mobile communications system compatible with W-CDMA (UMTS), which uses HSDPA, will be described. Of course, the present invention can also be applied to communications device used in other mobile communications systems.

In the figure, 1 is an antenna, 2 is a duplexer, 3 is a demodulator, 4 is a CPICH reception processor, 5 is an HS-SCCH reception processor, 6 is an HS-PDSCH reception processor, 7 is a memory unit, 8 is a control unit, and 9 is a transmission processor.

The mobile terminal receives downlink channels (for example, CPICH, P-CCPCH, HS-SCCH, HS-PDSCH, etc.) through an antenna 1, and applies them to a demodulator 3 through a duplexer 2. The demodulator 3 performs reception processing for the received signal such as orthogonal wave detection, and the like, and applies the demodulated signal to the CPICH reception processor 4, the HS-SCCH reception processor 5, and the HS-PDSCH reception processor 6.

The CPICH reception processor 4 measures the reception environment used for specifying the CQI information as the parameter that is used in the adaptive modulation control in the base station. For example, the SIR of the CPICH downlink signal is measured. Additionally, the CPICH reception processor 4 uses the fact that the CPICH that is received is a known signal in order to calculate channel inference values for compensating for phase rotation, and attenuation, and the like for the signal in a transmission path (i.e., to perform channel compensation) and applies the results to the HS-SCCH reception processor 5 and the HS-PDSCH reception processor 6. Obtaining the channel inference values through evaluating, in the phase plane, how much the received signal has shifted relative to a known signal is a well-known technique.

Note that the measurement of the reception environment is done by measuring, at regular intervals between 4 slots and 1 slot previous to the slot wherein, for example, the CQI data is sent. Although a variety of different measurement periods can be considered, performing one measurement in 20 ms, sending the same measurement results repetitively in the first through fourth subframes, not sending in the sixth subframe, and then beginning to measure once in the next wireless frame, and then, similarly, sending in specific subframes is a possibility.

HS-SCCH reception processor 5 is a reception processor for receiving a signal that is transmitted through the HS-SCCH, shown in Figure 1, where each of the first slots of HS-SCCH uses the channel inference value to perform a reverse-spreading process and a decoding process to determine whether or not there is a message to the local terminal.

The first slot is a slot that transmits a signal wherein the Channelization Code Set Information (Xccs) and Modulation Scheme Information (Xms) are convolved together and encoded, multiplied with the User Equipment Identity (Xue) and transmitted, making it possible for the mobile terminals to determine whether or not there is a message for the local mobile terminal through performing decoding processes and reverse-consolation processes using the local Xue. If it is determined that a message is for the local terminal, then not only is reception performed for the remaining HS-SCCH slots, but an attempt is made to receive the HS-PDSCH signal that is transmitted with a 2-slot delay.

Here, when the HS-PDSCH reception is performed, demodulation is performed using the set of reverse-spreading codes specified by Xccs, and a demodulation method corresponding to the modulation method specified by Xms. Note that the Transport Block Size information (Xtbs), Hybrid ARQ Process information (Xhap), Redundancy and constellation Version (Xrv), and New Data indicator (Xnd) are included in the second slot and beyond in HS-SCCH. The meaning and roles played by these data are well-known, and thus explanations thereof are omitted.

The HS-PDSCH reception processor 6 performs the reception processing when there is a message to the local terminal in the HS-SCCH processor 5, and outputs to the control unit 8 the results of demodulation and decoding. As has already been explained, the information that is required for performing the demodulation processes, and the like, is obtained through reception through the HS-SCCH. The control unit 8 is able to confirm whether or not there actually was a transmission to the local terminal through the HS-PDSCH, from the results of the decoding (confirming that, for example, there was no CRC error).

Furthermore, the HS-PDSCH reception processor 6 also performs the SIR measurement when there is a message to the local terminal. Note that this measurement may instead be performed only when it has been determined that the reception environment is favorable.

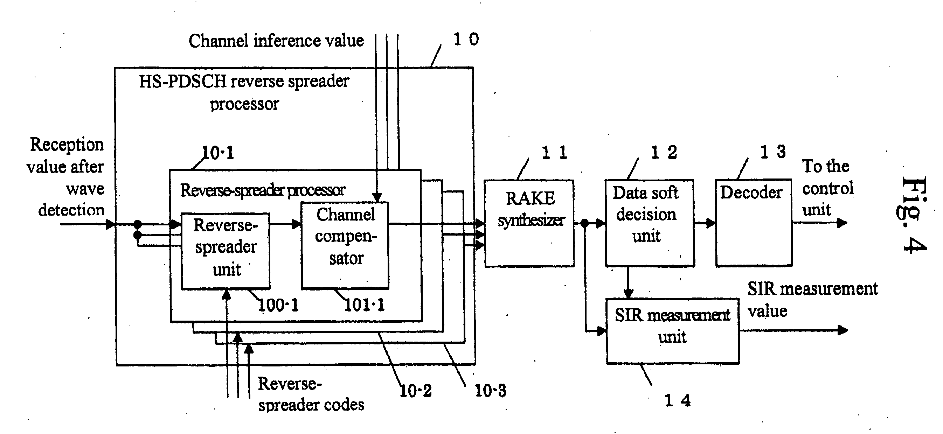

Here, Figure 4 will be used to provide a brief explanation of the SIR measurement process in the HS-PDSCH reception processor 6.

In Figure 4, 10 indicates the HS-PDSCH reverse-spreading processor. Note that the HS-PDSCH reverse-spreading processor 10 should be equipped with a quantity matching the number of codes that will perform reverse-spread processing.

The reverse-spreading processor 10 is equipped with multiple reverse-spreading processors 10-1 through 10-3 (where, in this example embodiment, there are 3 reverse-spreading processors), to handle multiple paths, where each of the reverse-spreading processors comprises a reverse-spreading part 100-1 and a channel compensator 101-1.

A RAKE synthesizer 11 performs maximum-ratio synthesis for the signals after the reverse spreading from the reverse spreading processors. 12 indicates a data soft-decision unit, and 13 indicates a decoder that performs decoding processes such as turbo decoding on the input data.

The operations will be described briefly next.

The input reception signal is input in parallel into the reverse-spreading processors 10-1 through 10-3, and input into the respective reverse-spreading units 100 (-1 through -3).

The reverse-spreading units 100 use the reverse-spreading codes applied by the reverse-spreading code generator (not shown) to perform reverse-spreading processes on the reception signals.

Here the reverse-spreading units 100-1 through 100-3 perform reverse spreading processing for the respective paths, and each have mutually differing reverse-spreading timing.

In the reverse-spreading units 100, the reverse-spread reception signals are input into the channel compensators 101 (-1 through -3), where channel compensation processes, which should compensate for phase rotation, attenuation, and the like, in the transmission path, are performed.

As explained above, the channel inference value from the CPICH reception processor 4 is input into the HS-PDSCH reception processor 6, where this channel inference value can perform the channel compensation through multiplying the reception signal with the channel compensation coefficients.

The multipath-compatible reception signal, after reverse-spreading processing in the reverse-spreading processor 10-1, as described above, is input into the RAKE synthesizer 11, where maximum-ratio synthesis is performed, and results are output.

The RAKE-synthesized signal is next subjected to decisions regarding the corresponding signal points in the data soft-decision unit 12, and likelihood information that indicates how closely the signal points are approximated is output.

The SIR measurement unit 14 calculates the SIR based on the deviation from the signal points, judged by the data soft-decision unit for the reception unit after RAKE synthesis, and outputs the calculated SIR to the control unit 8.

Decoder 13 performs a decoding process, such as turbo decoding, or the like, on the input data, and after error correction, the data is output to the control unit 8.

As described above, the HS-PDSCH decoding and SIR measurement are performed in the HS-PDSCH processor 6, and the results thereof are input into the control unit 8.

Let us again return to the explanation of Figure 3.

The memory unit 7 stores, in addition to the CQI (Table 1), shown in Figure 2, the CQI information corresponding to the SIR of the HS-PDSCH, along with the CQI table that stores the CQI information (Table 2).

The control unit 8 not only controls the operations of the various parts, but receives, from the CPICH reception processor 4, the reception SIR, receives reception data from the HS-SCCH, and receives decoding data and reception SIR information from the HS-PDSCH, and processes the same.

Furthermore, the information that is stored in the memory unit 7 is referenced to produce the CQI information, which is applied to the transmission processor 9, and depending on the results of the CRC check in the HS-PDSCH, the ACK signal or NACK signal is produced, and is similarly applied to the transmission processor 9.

The transmission processor 9 transmits, from the control unit 8, the CQI information and the ACK or NACK signal in a specific slot in the HS-DPCCH.

The operations of various units shown in Figure 3 were explained above. Note that the base station not only performs transmission in a transmission (modulated) method based on the CQI information that was received through the HS-DPCCH, but also transmits the next new data when an ACK signal is received, or when the NACK signal is received, or when no ACK signal is received within a specific amount of time, performs a retransmission of the transmission data.

CQI Information Generation Method 1

Next, the method of generating the CQI information, which comprises the parameters that are sent to the base station by the mobile terminal, will be explained in detail.

In this example, the processor unit 8 determines, based on the CPICH SIR measurement value from the CPICH reception processor unit 4, whether the reception environment is favorable or unfavorable, and if the reception environment is favorable, the HS-PDSCH reception quality is used.

As explained above, the signal received through the HS-PDSCH is not a known signal, and so generally the reception quality (SIR) cannot be measured actually through a signal point error judgment.

However, when the reception environment is favorable, the decision accuracy for the signal points is heightened, and thus the measurement precision of the quality (SIR) of the HS-PDSCH is enhanced, and thus it is possible to improve the reliability through the indirect use of the reception quality of the CPICH.

In particular, the better the reception environment, the more important it is to perform high-speed transmission by performing the adaptive modulation control accurately, and so this is convenient.

Given this, in the CQI information generation method 1, when the SIR measurement value is greater than a specific reference, the CQI information is generated using the CQI table (Table 2) for the HS-PDSCH that is recorded in the memory unit 7, based on the SIR measurement value from the HS-PDSCH reception processor 6, and said CQI data is applied to the transmission processor 9.

Note that, in the various transmission conditions in the table, it is possible to either measure the reception SIR for the HS-PDSCH with a specific error rate, or possible to generate said reception SIR through simulations, and, in particular, when it comes to the parts to perform transmissions at high speeds, it is preferable for the corresponding HS-PDSCH SIR values to be stored in memory in advance. Of course, all of the transmission conditions can be prepared in advance.

On the other hand, when the SIR measured values for the CPICH reception processor 4 are below a specific standard, the control unit 8 generates the CQI information using the CQI table (Table 1) that is stored in the memory unit 7, based on the SIR measured values from the CPICH reception processor 4, with the results applied to the transmission processor 9.

In this way, if the reception environment is favorable, then the CQI information is generated based on the HS-PDSCH reception quality (SIR), but if the reception environment is not favorable, then the CQI information is generated based on the CPICH reception quality (SIR), thus making it possible to use effectively the HS-PDSCH reception SIR.

Note that, using a different expression, when the reception environment is favorable, the measurement results of the HS-PDSCH reception SIR are used, making it possible to use the HS-PDSCH reception SIR effectively.

CQI Information Generation Process 2 (Shared Table)

Note that in this example, 2 CQI tables were prepared, but a signal table may be used instead. In other words, of these CQI tables, the CQI can be associated with the HS-PDSCH reception SIR for the side on which the reception environment is favorable (the side wherein the CQI is large), and the CQI can be associated with the CPICH reception SIR on the side wherein the reception environment is not favorable (the side wherein the CQI is small).

By doing this, the control unit 8 may switch between using the CQI from the CPICH and using the CQI from the HS-PDSCH, with Table 1 remaining as it is, using the SIR as the key information in referencing the table depending on the reception environment. At this time, only a single SIR value corresponding to the CQIs that have been obtained, can be used, so all of the SIR values must be either those from the CPICH or those from the HS-PDSCH.

By switching the SIR, which is the key at this time, it is possible to change the table reference part as well, making it possible to perform the adaptive modulation control effectively.

CQI Information Generation Method 3 (Weighted Composite)

Furthermore, while the SIR used in the CQI characteristics can simply be switched between that of the CPICH and that of the HS-PDSCH, as a more sophisticated concept, the reception SIR from the CPICH and the reception SIR from the HS-PDSCH can form a weighted compound.

In other words, when the reception environment is favorable (for example, when the reception SIR for the CPICH is high), then the weighting on the HS-PDSCH would be greater than the weighting on the CPICH, but when the reception environment is not favorable (for example, when the reception SIR for the CPICH is low), then the weighting on the HS-PDSCH would be less than the weighting on the CPICH.

By doing this, the CQI information can be selected according to, primarily, the reception quality of the HS-PDSCH when the reception environment is favorable, but, when the reception environment is not favorable, the CQI information can be selected according to, primarily, the reception quality of the CPICH. Note that the table used for this can be the table shown in Figure 2.

Note that in the example embodiment described above the SIR value can be corrected, as necessary, through referencing the CQI table.

Reception Environment - Other Decision Method 1

In the example above, the decision as to whether or not the reception environment is favorable or unfavorable was made based on the reception SIR of the CPICH, but changes can also be made other parameters. For example, the reception quality of other channels, such as the HS-SCCH or the HS-PDSCH, can be used. Note that, in this case, the decision as to whether or not there is a transmission to the local terminal in the HS-PDSCH is made by the process described above in the HS-SCCH reception processor 5, and if the transmission to the local terminal is expected, then the reception quality (SIR) of the HS-PDSCH is measured, and if the value is high, then the value can be used in generating the CQI information. In such a case, it is desirable to use Table 2.

Reception Environment - Other Decision Method 2

Furthermore, it is also possible to judge whether the reception environment is favorable or unfavorable through information provided through the HS-SCCH.

In other words, it is possible to judge whether or not the reception environment is favorable or unfavorable through detecting, in the HS-SCCH reception process, a notification that high-speed communications are taking place at the local terminal.

For example, any of the following can be used: (1) Channelization Codes Set Information (Xccs): information that specifies the assigned spreading code set, the number of spreading codes, etc. (2) Modulation Scheme Information (Xms): information that specifies the modulation scheme, or (3) Transport Box Size Information (Xtbs): information that specifies the transport box size.

From (1), the reception environment can be judged to be favorable when the assignment of more than a specific number of spreading codes has been detected, or, from (2), the reception environment can be judged to be favorable when the Xtbs specifies more than a specific transport box size (more than a specific number of bits) when it has been detected that a 16 QAM has been specified.

In particular, when it comes to (1) and (2), it is possible to use these methods quickly, because this information is sent rapidly in the first slot.

Although fundamental explanations were made regarding the CQI information generation, above, when it comes to the constant transmission of the CPICH, it is useful to consider the fact that the HS-PDSCH is not always transmitted to the local terminal at all times.

As is shown in Figure 1, it is possible to measure the CPICH on a regular basis with the SIR measurement period when the CQI should be sent at regular intervals; however, it is possible with HS-PDSCH that this information is not sent to the local terminal.

Given this, when it comes to the SIR of the HS-PDSCH, the control unit 8 may store in memory SIR's that have been measured when there have been transmissions to the local terminal, prior to the CQI transmission, and use that stored information to perform the processes described above for the reception SIR for the HS-PDSCH.

Note that changes in the propagation environment when using a reception SIR for which too much time has elapsed may cause the adaptive modulation control to be incorrect, and thus SIR values for which more than a specific amount of time has elapsed should not be used, but rather it should be defined that there are no measured values for the received SIR of the HS-PDSCH, and the control unit 8 should generate the CQI information based on the received SIR of the CPICH.

The received SIR for the HS-PDSCH considered to have the highest reliability is the SIR that was measured in the subframe shown by the I in Figure 1, wherein a subframe can be received completely prior to the timing of the transmission of the CQI in Figure 1; however, in cases wherein there is a mismatch between the measurement timing, such as for the CPICH, and the subframe timing is tolerable, it is also possible to use the same measurement timing as the CPICH measurement timing.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A communications device for receiving pilot signals and signals subjected to adaptive modulation control, comprising:
a first measurement unit (4, 5, 6) operable to measure reception quality of the pilot signals;
a second measurement unit (4, 5, 6) operable to measure reception quality of a signal that has been sent via a High Speed-Physical Downlink Shared Channel, HS-PDSCH;
a control unit (8) operable to control, upon producing parameter information that is used in the adaptive modulation control, to use, primarily, the measurement results in the first measurement unit when the reception environment is not favorable, or to use, primarily, the measurement results in the second measurement unit when the reception environment is favorable; and
a transmitter unit (9) operable to transmit the parameter information to a base station, wherein
the reception environment is favorable when a Channel Quality Indicator, CQI, value is greater than a reference value and the reception environment is not favorable when the CQI value is below the reference value.

2. The communications device according to Claim 1, wherein:
said control unit (8) is further operable to use, primarily, the measurement result from the second measurement unit (4, 5, 6) when the reception environment is favorable, and to use, primarily, the measurement result from the first measurement unit (4, 5, 6) when the reception environment is not favorable.

3. The communications device according to Claim 1 or 2, wherein the reception environment is calculated from the measurement result in the first measurement unit (4, 5, 6).

4. The communications device according to Claim 1, 2 or 3, wherein:
the control unit (8) is further operable to either:
provide control to switch to generating CQI information using the measurement result in the first measurement unit (4, 5, 6), or provide control to switch to generating CQI information using the measurement result in the second measurement unit (4, 5, 6), depending on the reception environment; or
provide control to switch, depending on the reception environment, a weighting ratio for the measurement result in the first measurement unit and the measurement result in the second measurement unit from having the measurement result in the first measurement unit take priority, to having the measurement result in the second measurement unit take priority.

5. The communications device according to Claim 4, further comprising:
a memory unit (7) operable to store:
primary memory data including a correlation between the CQI information and the measurement result in the first measurement unit (4, 5, 6), and
secondary memory data including a correlation between the CQI information and the measurement result in the second measurement unit (4, 5, 6); and
wherein when performing the switching, the memory information used in generating the CQI information is switched as well.

6. The communications device according to Claim 1, 2, or 3, further comprising:
a memory unit (7) operable to store a correlation relationship between the measured values and the CQI information; and
a compensation unit (13) operable to correct the measurement result in the first measurement unit (4, 5, 6) or the measurement result in the second measurement unit (4, 5, 6);
wherein the control unit (8) generates the CQI information by obtaining, from the memory unit, the CQI information that corresponds to the measurement result corrected by the compensation unit.

7. The communications device according to any of Claims 1 to 6, wherein:
the first measurement unit (4) is operable to measure CPICH, Common Pilot Channel, reception quality as the reception quality of the pilot signals; and
the control unit (8) is operable to control a process of providing CQI, Channel Quality Indicator, information as the process of providing the parameter information that is used in the adaptive modulation control.

## Patentansprüche

1. Kommunikationsgerät zum Empfangen von Pilotsignalen und Signalen, die adaptiver Modulationssteuerung unterzogen werden, das Folgendes umfasst:
eine erste Messeinheit (4, 5, 6), die betriebsfähig ist, um die Empfangsqualität der Pilotsignale zu messen;
eine zweite Messeinheit (4, 5, 6), die betriebsfähig ist, um die Empfangsqualität eines Signals zu messen, das über einen High Speed-Physical Downlink Shared Channel, HS-PDSCH, gesendet wurde,
eine Steuereinheit (8), die betriebsfähig ist, um beim Erzeugen von Parameterinformationen, die in der adaptiven Modulationssteuerung verwendet werden, primär die Messergebnisse in der ersten Messeinheit zu verwenden, wenn die Empfangsumgebung nicht günstig ist, oder primär die Messergebnisse in der zweiten Messeinheit zu verwenden, wenn die Empfangsumgebung günstig ist; und
eine Sendereinheit (9), die betriebsfähig ist, um die Parameterinformationen an eine Basisstation zu senden, wobei
die Empfangsumgebung günstig ist, wenn der Wert eines Channel Quality Indicator, CQI, größer ist als ein Bezugswert, und die Empfangsumgebung nicht günstig ist, wenn der CQI-Wert unter dem Bezugswert liegt.

2. Kommunikationsgerät nach Anspruch 1, wobei:
die Steuereinheit (8) ferner betriebsfähig ist, um primär das Messergebnis von der zweiten Messeinheit (4, 5, 6) zu verwenden, wenn die Empfangsumgebung günstig ist, und primär das Messergebnis von der ersten Messeinheit (4, 5, 6) zu verwenden, wenn die Empfangsumgebung nicht günstig ist.

3. Kommunikationsgerät nach Anspruch 1 oder 2, wobei die Empfangsumgebung von dem Messergebnis in der ersten Messeinheit (4, 5, 6) berechnet wird.

4. Kommunikationsgerät nach Anspruch 1, 2 oder 3, wobei:
die Steuereinheit (8) ferner betriebsfähig ist, um entweder:
eine Steuerung zum Schalten auf das Erzeugen von CQI-Informationen unter Verwendung des Messergebnisses in der ersten Messeinheit (4, 5, 6) bereitzustellen oder eine Steuerung zum Schalten auf das Erzeugen von CQI-Informationen unter Verwendung des Messergebnisses in der zweiten Messeinheit (4, 5, 6) in Abhängigkeit von der Empfangsumgebung bereitzustellen; oder
eine Steuerung zum Schalten eines Gewichtungsverhältnisses für das Messergebnis in der ersten Messeinheit und das Messergebnis in der zweiten Messeinheit vom Erhalten des Vorrangs des Messergebnisses in der ersten Messeinheit zum Erhalten des Vorrangs des Messergebnisses in der zweiten Messeinheit in Abhängigkeit von der Empfangsumgebung umfasst.

5. Kommunikationsgerät nach Anspruch 4, das ferner Folgendes umfasst:
eine Speichereinheit (7), die betriebsfähig ist, um Folgendes zu speichern:
primäre Speicherdaten, die eine Korrelation zwischen den CQI-Informationen und dem Messergebnis in der ersten Messeinheit (4, 5, 6) umfassen, und
sekundäre Speicherdaten, die eine Korrelation zwischen den CQI-Informationen und dem Messergebnis in der zweiten Messeinheit (4, 5, 6) umfassen; und
wobei beim Durchführen des Schaltens auch die Speicherinformationen, die beim Erzeugen der CQI-Informationen verwendet werden, geschaltet werden.

6. Kommunikationsgerät nach Anspruch 1, 2 oder 3, das ferner Folgendes umfasst:
eine Speichereinheit (7), die betriebsfähig ist, um eine Korrelationsbeziehung zwischen den gemessenen Werten und den CQI-Informationen zu speichern; und
eine Kompensationseinheit (13), die betriebsfähig ist, um das Messergebnis in der ersten Messeinheit (4, 5, 6) oder das Messergebnis in der zweiten Messeinheit (4, 5, 6) zu korrigieren;
wobei die Steuereinheit (8) CQI-Informationen durch Erhalten der CQI-Informationen, die dem durch die Kompensationseinheit korrigierten Messergebnis entsprechen, von der Speichereinheit erzeugt.

7. Kommunikationsvorrichtung nach einem der Ansprüche 1 bis 6, wobei:
die erste Messeinheit (4) betriebsfähig ist, um die CPICH, Common Pilot Channel, Empfangsqualität als die Empfangsqualität der Pilotsignale zu messen; und
die Steuereinheit (8) betriebsfähig ist, um einen Prozess zum Bereitstellen von CQI, Channel Quality Indicator, Informationen als den Prozess des Bereitstellens der Parameterinformationen zu steuern, die in der adaptiven Modulationssteuerung verwendet werden.

## Revendications

1. Dispositif de communication pour recevoir des signaux pilotes et des signaux soumis à un contrôle de modulation adaptative, comportant :
une première unité de mesure (4, 5, 6) permettant de mesurer une qualité de réception des signaux pilotes ;
une seconde unité de mesure (4, 5, 6) permettant de mesurer une qualité de réception d'un signal qui a été envoyé par l'intermédiaire d'un canal partagé physique en liaison descendante à haut débit, HS-PDSCH ;
une unité de contrôle (8) permettant de contrôler, lors de la production d'une information de paramètre qui est utilisée dans le contrôle de modulation adaptative, l'utilisation, d'abord, des résultats de mesure dans la première unité de mesure lorsque l'environnement de réception n'est pas favorable, ou l'utilisation, d'abord, des résultats de mesure dans la seconde unité de mesure lorsque l'environnement de réception est favorable ; et
une unité de transmission (9) permettant de transmettre l'information de paramètre à la station de base, dans lequel
l'environnement de réception est favorable lorsqu'une valeur d'indicateur de qualité de canal, CQI, est supérieure à une valeur de référence et l'environnement de réception n'est pas favorable lorsque la valeur CQI se trouve en dessous de la valeur de référence.

2. Dispositif de communication selon la revendication 1, dans lequel :
ladite unité de contrôle (8) permet en outre d'utiliser, d'abord, le résultat de mesure provenant de la seconde unité de mesure (4, 5, 6) lorsque l'environnement de réception est favorable, et d'utiliser, d'abord, le résultat de mesure provenant de la première unité de mesure (4, 5, 6) lorsque l'environnement de réception n'est pas favorable.

3. Dispositif de communication selon la revendication 1 ou 2, dans lequel l'environnement de réception est calculé à partir du résultat de mesure dans la première unité de mesure (4, 5, 6).

4. Dispositif de communication selon la revendication 1, 2 ou 3, dans lequel :
l'unité de contrôle (8) permet en outre :
soit de fournir un contrôle pour passer à la génération d'une information CQI en utilisant le résultat de mesure dans la première unité de mesure (4, 5, 6), soit de fournir un contrôle pour passer à la génération d'une information CQI en utilisant le résultat de mesure dans la seconde unité de mesure (4, 5, 6), selon l'environnement de réception ;
soit de fournir un contrôle pour commuter, selon l'environnement de réception, un rapport de pondération pour le résultat de mesure dans la première unité de mesure et pour le résultat de mesure dans la seconde unité de mesure, le résultat de mesure dans la première unité de mesure étant pris en priorité jusqu'au résultat de mesure dans la seconde unité de mesure.

5. Dispositif de communication selon la revendication 4, comportant en outre :
une unité de mémoire (7) permettant de mémoriser:
des données de mémoire primaire comprenant une corrélation entre l'information CQI et le résultat de mesure dans la première unité de mesure (4, 5, 6), et
des données de mémoire secondaire comprenant une corrélation entre l'information CQI et le résultat de mesure dans la seconde unité de mesure (4, 5, 6) ; et
dans lequel, lors de l'exécution de la commutation, l'information de mémoire utilisée lors de la génération de l'information CQI est également commutée.

6. Dispositif de communication selon la revendication 1, 2 ou 3, comportant en outre :
une unité de mémoire (7) permettant de mémoriser une relation de corrélation entre les valeurs mesurées et l'information CQI ; et
une unité de compensation (13) permettant de corriger le résultat de mesure dans la première unité de mesure (4, 5, 6) ou le résultat de mesure dans la seconde unité de mesure (4, 5, 6) ;
dans lequel l'unité de contrôle (8) génère l'information CQI en obtenant, à partir de l'unité de mémoire, l'information CQI qui correspond au résultat de mesure corrigé par l'unité de compensation.

7. Dispositif de communication selon l'une quelconque des revendications 1 à 6, dans lequel :
la première unité de mesure (4) permet de mesurer une qualité de réception CPICH, canal pilote commun, en tant que qualité de réception des signaux pilotes ; et
l'unité de contrôle (8) permet de contrôler un processus de délivrance d'information CQI, indicateur de qualité de canal, en tant que processus de délivrance de l'information de paramètre qui est utilisée dans le contrôle de modulation adaptative.
